Europäisches Patentamt

European Patent Office

Office européen des brevets

(11) Veröffentlichungsnummer: **0 063 246**
**B1**

# (12) EUROPÄISCHE PATENTSCHRIFT

(45) Veröffentlichungstag der Patentschrift:
29.05.85

(21) Anmeldenummer: **82102310.8**

(22) Anmeldetag: **20.03.82**

(51) Int. Cl.⁴: **F 23 C 11/04**, B 01 J 3/08,
C 01 B 3/38

(54) **Verfahren zum Betreiben eines Schwingrohrreaktors für chemische Reaktionen.**

(30) Priorität: **16.04.81 DE 3115391**

(43) Veröffentlichungstag der Anmeldung:
**27.10.82 Patentblatt 82/43**

(45) Bekanntmachung des Hinweises auf die Patenterteilung:
**29.05.85 Patentblatt 85/22**

(84) Benannte Vertragsstaaten:
**DE FR GB IT NL**

(56) Entgegenhaltungen:
**G.W.F., GAS- UND WASSERFACH, GAS-ERDGAS, Band 120, Heft 12, 1979, Seiten 574-578, R. Oldenbourg Verlag GmbH, München, DE., D. GEORGE et al.: "Die Technik der Partiellen Oxidation von Kokerei-Rohgas im Schwingrohr"**

(73) Patentinhaber: **Bergwerksverband GmbH,
Franz-Fischer-Weg 61, D-4300 Essen 13 (DE)**

(72) Erfinder: **George, Dietrich, Dr., Tiergarten 22/24,
D-4300 Essen-Werden (DE)**
Erfinder: **Huck, Georg, Dr.-Ing., Meininghausstrasse 11,
D-4600 Dortmund-Gartenstadt (DE)**
Erfinder: **Ehnert, Wolfram, Brunhildenstrasse 49,
D-4300 Essen-Kray (DE)**

**Beschreibung**

Die Erfindung betrifft ein Verfahren zum Betreiben eines Schwingrohrreaktors für chemische Reaktionen gemäß dem Oberbegriff von Patentanspruch 1.

Bei chemischen Reaktionen der eingangs genannten Art kann die Reaktionsgeschwindigkeit bekanntlich dadurch erhöht werden, daß die reaktionshemmenden Diffusionsschichten zwischen den Reaktanden durch pulsierende Bewegungen der Reaktanden im Reaktionsraum vermindert oder beseitigt werden. Hierzu verwendet man sogenannte Schwingrohre, wie sie z. B. in P. Schmidt, Entwicklung der Zündung periodisch arbeitender Strahlgeräte; VDI-Zeitschrift 82 (1950), Nr. 16, S. 393/399, sowie Fritz A. F. Schmidt, Möglichkeiten zur Steigerung der Energieumsetzung durch pulsierende Verbrennung; Forsch. Ing.-Wes. 31 (1965), Nr. 5, S. 156/166, beschrieben werden.

Es ist jedoch bei vielen Reaktanden schwierig, eine ausreichende Durchmischung derselben vor Eintritt in die Reaktionskammer zu erzielen, da eine Rückwirkung der Schwingungen im Schwingrohrreaktor und der dort herrschenden Reaktionsbedingungen auf das Einlaßsystem für die Reaktanden zu vermeiden ist.

Bei Kohledestillationsgasen, insbesondere Koksofenrohgasen, ist bisher auf den Kokereien eine Aufbereitung und Reinigung erforderlich, die einerseits aufwendig ist und andererseits erst in weiteren Verfahrensschritten zu einem wasserstoff- und kohlenmonoxidreichen Gas führt, das später zu Reich-, Synthese- oder Reduktionsgas weiterverarbeitet werden kann. Eine partielle Oxidation und teilweise Spaltung von festen, flüssigen und gasförmigen Brennstoffen zur Erzeugung reduzierender Gase konnte zwar schon in einem Schwingrohr durchgeführt werden, jedoch handelt es sich hierbei um vergleichsweise problemlose Reaktanden, wie z. B. Stadtgas, d. h. gereinigtes Koksofengas, und reine Kohlenwasserstoffe, wie z. B. Methan, bzw. feste Brennstoffe; es waren dabei weder zähflüssige Reaktanden noch ungünstige Reaktionsbedingungen im Spiele, wenngleich es auch zum Teil nötig war, die Reaktanden ohne Verwendung von z. B. aerodynamischen Ventilen in die Reaktionskammer einzuspeisen, um Verstopfungen zu vermeiden (Erzmetall 30 (1977), Seiten 51 bis 54).

Weitere Untersuchungen zum Umsatz von Koksofenrohgas sind im Versuchsmaßstab durchgeführt worden. Bei diesem Schwingrohrreaktor handelte es sich um eine Vorrichtung bei der eine Mischkammer für die Reaktanden mit Kühlrippen, nachfolgend eine Brennkammer nachfolgend ein Resonanzrohr sowie nachfolgend ein Diffusor, oder, sofern im »geschlossenen System« gearbeitet werden sollte, eine Ausgleichskammer sowie Zu- und Abführeinrichtungen für Reaktanden und Reaktionsprodukte vorgesehen sind. Hierbei zeigte sich, daß am Einlaß angeordnete Klappenventile nur eine begrenzte Lebensdauer haben. Auch sogenannte aerodynamische Ventile, das sind im oder am Kanal fest angeordnete Körper, die die Strömung in der einen Richtung kaum, in der anderen aber stark durch Wirbelbildung drosseln, brachten keinen Erfolg. Außerdem zeigte es sich, daß bei einem größeren Reaktor die warmgehenden Elemente mit einem gekühlten Material ausgestattet werden müssen (gwf Gas/Erdgas 120 (1979) Seiten 574 bis 578, insbesondere Seite 575, Bild 1 und Seite 576, Absatz 3).

Der Erfindung liegt die Aufgabe zugrunde, ein Verfahren zum Betreiben eines Schwingrohrreaktors der eingangs genannten Art bereitzustellen, mit dem es möglich ist, auch solche Reaktanden miteinander reagieren zu lassen, die im Hinblick auf das Vermischen und Einspeisen in die Reaktionskammer problematisch sind, wie z. B. teer- und wasserdampfhaltiges Kohledestillationsgas, und seiner Nebenprodukte.

Die Erfindung wird hinsichtlich des Verfahrens zum Betreiben eines solchen Schwingrohrreaktors durch die Merkmale von Patentanspruch 1 gelöst; Weiterbildungen der Erfindung ergeben sich aus den Unteransprüchen.

Kohledestillationsgase mischt man bei Temperaturen zwischen 100 und 500° C, vorzugsweise zwischen 150 und 400° C, mit Sauerstoff oder sauerstoffhaltigen Gasen. Die Abkühlung der Rohgase auf die o. a. Temperaturen erfolgt zweckmäßig mit wäßrigen Kondensaten, die bei dem Gesamtprozeß eventuell anfallen. Es ist zur Vereinfachung des Verfahrens auch möglich, daß man die höhersiedenden Kohlenwasserstoffe oberhalb der Kondensationstemperatur des Wassers vor dem Mischen mit sauerstoffhaltigen Gasen aus den Kohledestillationsgasen abscheidet. Dies kann beispielsweise durch eine mechanische Abscheidung oder durch Elektrofilter erfolgen. Außerdem ist es möglich, daß man heiße Rohgase oberhalb der Kondensationstemperatur des Wassers, aber unterhalb ihrer Zündtemperatur, mit sauerstoffhaltigen Gasen mischt. Gute Ergebnisse werden bei der pulsierenden Oxidation erreicht, wenn man die Kohledestillationsgase bei einem Unterdruck bis 70 mbar (bezogen auf Atmosphärendruck) partiell oxidiert. Außerdem ist von Vorteil, die Rohgase bei einer Fördergeschwindigkeit von 20 bis 60 m/s mit den sauerstoffhaltigen Gasen zu mischen.

Die schwer zu handhabende Kohledestillationsgasspaltung zu Synthesegas in einem Schwingrohr mit einer unterstöchiometrischen Sauerstoffmenge ist überraschenderweise möglich, weil bei dem pulsierenden Prozeßablauf nicht nur durch ideale Mischvorgänge hohe Reaktionsgeschwindigkeiten erzielt werden, sondern weil auch ein Produktgas mit hohen Kohlenmonoxid- und Wasserstoffanteilen aus dem Rohgas entsteht. Man war vor der Erfindung eher geneigt anzunehmen, daß bei einer partiellen Oxidation (Verbrennung) von Kohlendestillationsgasen mit Sauerstoff zunächst die Wasserstoff- und die Kohlenmonoxidanteile oxidiert werden und die Kondensate und Agglomerate des Rohgases mehr oder weniger unbehandelt dem Prozeß entkommen. In der verwendeten Vorrichtung werden bei der erfindungsgemäßen Betriebsweise überraschenderweise aber gerade die in dem Gasgemisch enthaltenden Agglomerate und Kondensate fast bevorzugt umgesetzt, wie die Ergebnisse gezeigt haben. Außerdem wurde gefunden, daß mit steigender Brennraumbelastung der für die Umsetzung notwendige Sauerstoffanteil geringer wird. Es ist daher anzunehmen, daß neben den Oxidationsreaktionen auch die Spaltreaktionen ansteigen. — Ein besonderer, weiterer Vorteil, insbesondere bei der Stoffbilanz der Reaktionsteilnehmer, besteht darin, daß bei der Umsetzung eine Volumenvermehrung eintritt. Hierbei schwankt der Quotient Produktgas : Einsatzgas zwischen 1,2 und 2,0, entsprechend der Zusammensetzung des Rohgases, dem Verhältnis von Rohgas zu Sauerstoff und der Reaktionstemperatur.

Zweckmäßigerweise sichert man z. B. eine pulsierende Verbrennung (Reaktion) durch eine oder mehrere Stützflammen, die man auch zur Zündung verwenden kann, ab.

Es empfiehlt sich, zumindest die Mischstrecke für die Reaktanden senkrecht über der Reaktionskammer anzuordnen, weil hierdurch — z. B. in Verbindung mit einer Abrißkante am reaktionskammerseitigen Ende der Mischstrecke — das Abfließen bzw. Anströmen von Kondensaten und Agglomeraten der Reaktanden in die Reaktionskammer vorteilhaft unterstützt wird.

Eine allmählich zunehmende, steuerbare Mischung der Reaktanden in der Mischstrecke ist durch ringspaltförmige Injektoren an der Mischstrecke für die Reaktanden oder eine Injektionslanze in der Mischstrecke für mindestens einen Reaktanden möglich. Es können auch längs der Mischstrecke mehrere Aufgabestellen für mindestens einen Reaktanden angeordnet sein. Hierdurch wird erreicht, daß das für die Reaktion notwendige Mischungsverhältnis erst kurz vor Eintritt in die Reaktionskammer erzielt wird; unerwünschte Frühreaktionen können so vermieden werden.

Doppelschwingrohre, das sind zwei aus einer Mischstrecke, einer Reaktionskammer sowie einem Resonanzrohr bestehende Einheiten, die mit einer gemeinsamen Ausgleichskammer verbunden sind, ermöglichen eine Steigerung der Reaktionsmengen bei gleichbleibenden Schwingrohrabmessungen. Natürlich ist es möglich, sowohl eine beliebige Anzahl von Doppelschwingrohren als auch Einzel-Schwingrohrreaktoren parallel zu schalten, d. h. sie zentral mit Reaktanden zu versorgen und die Reaktionsprodukte zentral abzuführen. Hierdurch wird erreicht, daß auch bei großen Durchsatzleistungen die Abmessungen der Schwingrohrreaktoren in handhabbaren Abmessungen bleiben.

Katalysatoren können in die Reaktionskammer, aber auch in das Resonanzrohr, z. B. in Form von Wandbeschichtungen, Gittereinsätzen oder ähnlichem, angeordnet werden.

Erfindungsgemäß können auch Reaktionsprodukte im Schwingrohrreaktor einer weiteren chemischen Umwandlung unterzogen werden, so daß auch diese Reaktion unter den die Reaktionsgeschwindigkeit fördernden Einfluß der Schwingungen abläuft. Zum Beispiel kann es sich dabei um eine der CO- und $H_2$-Gewinnung aus Kohledestillationsgasen nachgeschaltete Methanisierung handeln.

Meistens wird ein Schwingrohrreaktor vor Beginn der Reaktion sich noch nicht auf den Reaktionsbedingungen befinden — dies gilt vor allem hinsichtlich der Temperaturführung. Deshalb empfiehlt es sich erfindungsgemäß, die Reaktionsbedingungen zunächst mit Hilfsreaktanden einzustellen, wobei diese so auszuwählen sind, daß auch im »kalten« Zustand des Reaktors mit diesen Hilfsreaktanden die Bedingungen des Patentanspruchs 1 erfüllt sind.

Kühlkondensate für gasförmige Reaktanden gemäß Patentanspruch 3 können kondensierte Reaktanden und/oder Reaktionsprodukte, aber auch andere Kondensate aus dem Prozeß, in dem das Verfahren angewendet wird, sein.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

In der Zeichnung zeigt

Fig. 1 schematische Darstellung eines Schwingrohrreaktors,

Fig. 2 eine Mischstrecke gemäß Fig. 1 im vergrößerten Teilabschnitt,

Fig. 3 eine Mischstrecke mit Injektionslanze,

Fig. 4 ein Doppelschwingrohr in schematischer Darstellung,

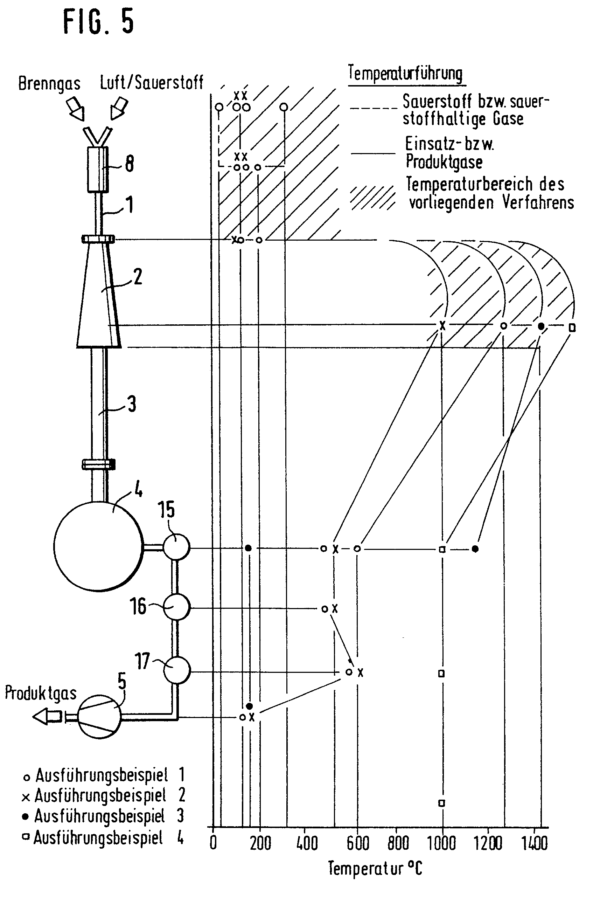

Fig. 5 ein Temperaturdiagramm von vier Ausführungsbeispielen.

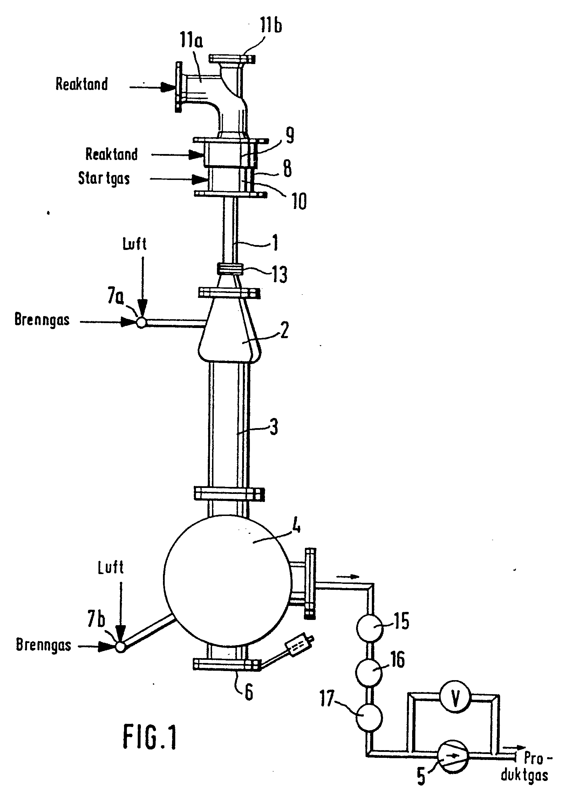

Gemäß Fig. 1 besteht ein erfindungsgemäß betriebener Schwingrohrreaktor, wie z. B. eine Anlage zur pulsierenden Teiloxidation von Kohledestillationsgasen, an konstruktiven Einzelelementen aus einem Mischrohr (Mischstrecke) 1, einer Brennkammer (Reaktionskammer) 2, einem Resonanzrohr 3 und einer Ausgleichskammer 4. Zu spaltendes Rohgas (Reaktand) tritt von oben kommend durch einen Rohrstutzen 11 in das Mischrohr 1 ein. Am oberen Ende des Mischrohres 1 befinden sich in einem Gehäuse 8 zwei Injektorsysteme 9 und 10 für die Zufuhr von Sauerstoff und/oder Luft (Reaktand) sowie einem Startgas. Ein solches Startgas ist in manchen Fällen zum Anheizen der Anlage, beispielsweise vor der Verarbeitung von Koksofenrohgasen, empfehlenswert. Es besteht aus einem Brenngas, z. B. aus dem Unterfeuerungsgas der Koksofenbatterien. Die sich im Mischrohr 1 vermischenden Gasströme werden mit einer Fördergeschwindigkeit oberhalb 13 m/s geführt, um Flammrückstände in das Mischrohr 1 zu vermeiden. Das im Mischrohr 1 gemischte Gas tritt nun in die Brennkammer 2 ein, um hier gezündet zu werden. Dies geschieht, zumindest in der Anfahrphase der Anlage, mittels des Stützbrenners 7a. Das Resonanzrohr 3 arbeitet jetzt von der ersten Zündung ab mit einer Frequenz, die bekannterweise von der Längendistanz zwischen Mischrohraustritt und Ausgleichskammereintritt gegeben ist. Nach der Anfahrphase kann der Stützbrenner 7a gelöscht werden, da weitere Zündungen zwangsläufig eintreten. Da aber beim Ofenbetrieb einer Kokerei das anfallende Rohgas in seiner Zusammensetzung über die Zeit nicht einheitlich und darüber hinaus von Inertgasblasen durchsetzt ist, ist es angebracht, wenn bei der unterstöchiometrischen Arbeitsweise der Verbrennung der Zündvorgang durch die Stützbrenner 7a und 7b gesichert ist.

Der Stützbrenner 7b ist in der Ausgleichskammer 4 angeordnet, die für alle Fälle mit einer Explosionsklappe 6 gesichert sein kann. Das Produktgas wird von einem Sauger 5 durch einen Wärmeaustauscher 15 zur Kühlung und durch zwei Reinigungsstufen 16 und 17 abgeführt, soweit die Reaktanden nicht mit einem zur Überwachung der Strömungswiderstände ausreichend hohen Überdruck anstehen.

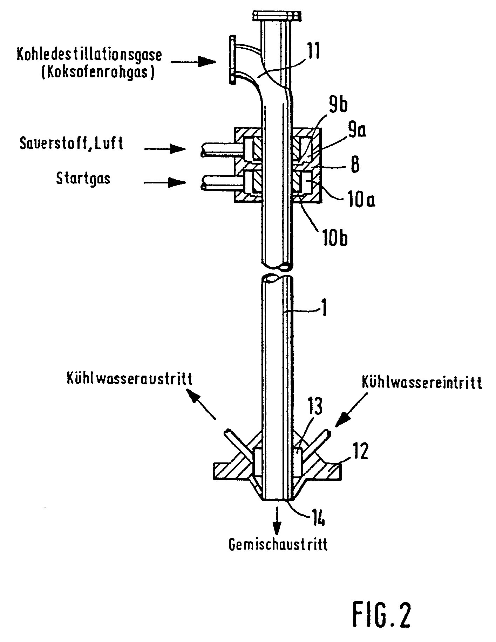

Gemäß Fig. 2 ist das Mischrohr 1 als der wichtigste Teil der Anlage im Detail dargestellt. Im Injektorgehäuse 8 sind zwei Injektorsysteme 9 und 10 für die Zuführung von Luft und/oder Sauerstoff sowie dem Startgas (letzteres fakultativ) vorgesehen. Jedes Injektorsystem besteht aus einer Ringkammer 9a und 10a, die das ihr zugeführte Medium über einen schmalen Ringspalt 9b und 10b schräg-radial dem Mischrohr 1 in der Weise zuführt, daß das Medium, beispielsweise der Sauerstoff, noch eine zeitlang die Oberfläche des Mischrohres 1 beschleiert. Am unteren Ende des Mischrohres 1 befindet sich der Einspeisekopf 12 für die vorgemischten Brennstoffkomponenten. Der Einspeisekopf 12 ist mit einem Kühlsystem (Kühleinrichtung) 13 versehen. Mittels der Beschleierung der Mischrohrwand mit Luft und/oder Sauerstoff sowie des Kühlens einer Abrißkante 14 an der Mischrohrmündung gelingt es, unvermeidliche Teerkondensationen so einzuschränken, daß damit eine Koksbildung vermieden wird. Hierbei leitet die gekühlte Abrißkante 14 die an der warmen Mischrohrwand ablaufenden Kondensattröpfchen in den Brennraum 2 ab.

Schließlich ist es für die Funktion der erfindungsgemäß betriebenen Vorrichtung wichtig, daß das Mischrohr, die Brennkammer und das Resonanzrohr senkrecht angeordnet sind.

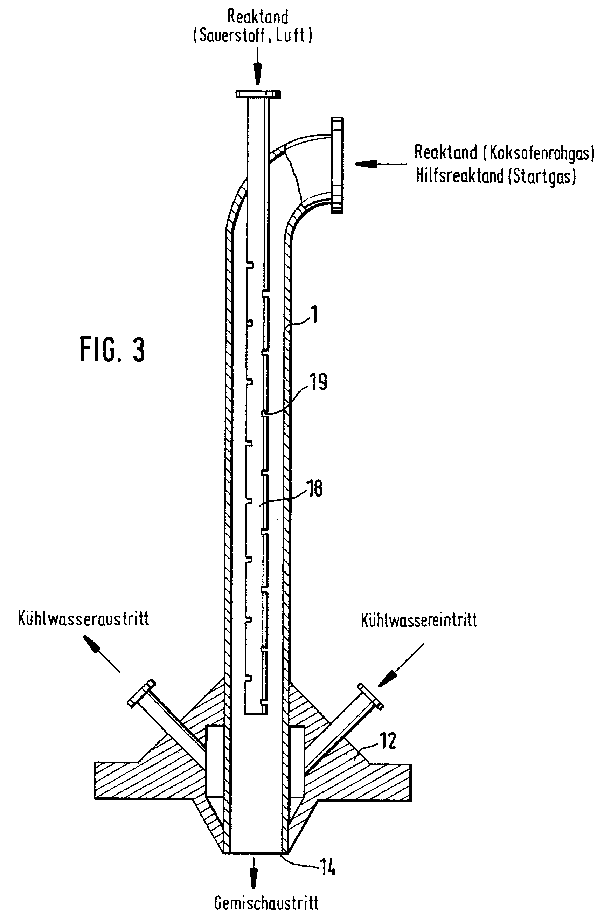

Gemäß Fig. 3 wird ein Mischrohr vorgestellt, bei dem die Durchmischung der Reaktanden partiell auf verschiedenen Ebenen stattfindet. Zu diesem Zweck wird in das Mischrohr 1 eine Lanze 18 eingebracht, die über ihre Länge mit Durchbrüchen 19 (Schlitzen oder Bohrungen) versehen ist, aus denen der injizierte Reaktand austreten kann. Bei den eng bemessenen Durchbrüchen wird vorausgesetzt, daß nur saubere Reaktanden in der Lanze geführt werden. Bei der im Ausführungsbeispiel aufgeführten Arbeitsweise mit Koksofenrohgasen wäre der injizierte Reaktand Luft und/oder Sauerstoff. Bei der partiellen Durchmischung ist es natürlich auch denkbar, das Mischrohr zu ummanteln und einen Reaktanden aus der Ummantelung über in der Höhe verschieden angeordnete Durchbrüche der Mischrohrwand in die Mischstrecke einzuführen.

Die Anwendung vermeidet weitestgehend ein Zurückschlagen der Flammenfront in die Mischstrecke, wenn die Anlage unter Teillast betrieben wird und dabei die erforderlichen Gasgeschwindigkeiten in der Mischstrecke nicht erreicht werden.

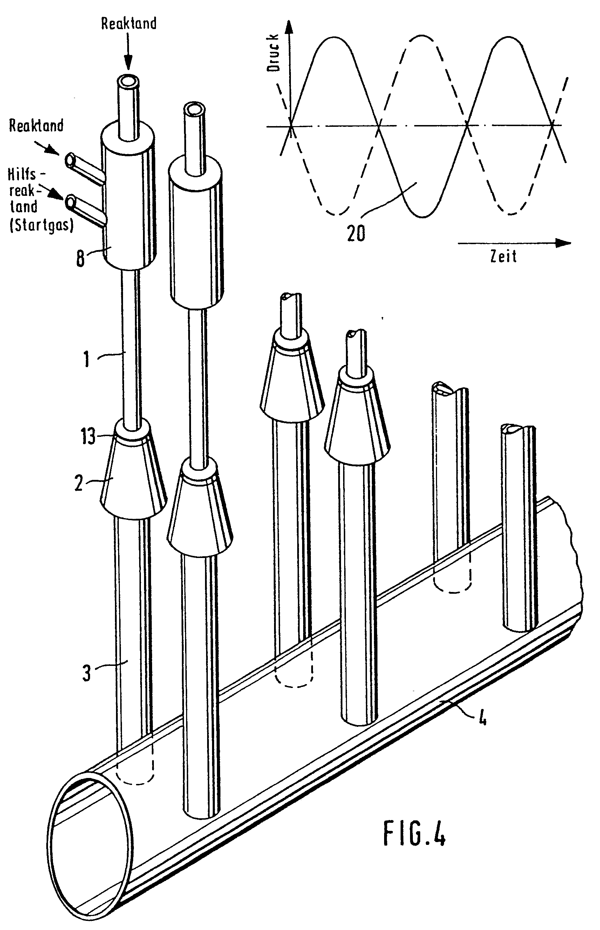

Fig. 4 zeigt eine Schwingrohrschaltung ähnlich dem Doppelschwingrohr von Esnault-Pelterie. Esnault-Pelterie wählte, im Gegensatz zur dargestellten Anordnung, in der Ausgleichskammer aufeinander zugezogene Resonanzrohre.

Ein Schwingrohrpaar arbeitet nach dem Prinzip des geringsten Zwanges gegenläufig, d. h., werden die Brennkammern mit Drucksensoren bestückt, so ergibt sich ein Oszillogramm ähnlich 20. Es ist daher möglich, paarweise mehrere, auf eine Ausgleichskammer geschaltete Rohre zu betreiben.

Die Verwendung des Doppelschwingrohres zeichnet sich durch eine verbesserte Laufruhe bei erhöhten Explosionsdrücken aus. Darüber hinaus ist hiermit die Möglichkeit gegeben, so große Brennstoffmengen zu verarbeiten, die sich nach dem Stand der Technik in einem einzigen Schwingrohr nicht umsetzen lassen.

Zu den nachfolgenden Ausführungsbeispielen sind Gasvolumina unter Normalbedingungen (Druck/Temperatur) wasserfrei angegeben. Die Mischstrecke hatte eine Länge von 1,2 m und einen Durchmesser von 0,04 m, die Brennkammer mit Resonanzrohr hatte eine Länge von 3 m und einen mittleren Durchmesser von 0,25 m; die zylindrische Ausgleichskammer hatte einen Durchmesser von 0,5 m und, nach Fig. 1, eine Länge von 1 m.

Beispiel 1 (Fig. 1)

90 m$^3$ Koksofenrohgas der Zusammensetzung 58 Vol.-% H$_2$, 6 bis 7 Vol.-% CO, 25 Vol.-% CH$_4$, 3 bis 3 Vol.-% CO$_2$, 3 bis 4 Vol.-% N$_2$, 0,5 Vol.-% O$_2$, 3 Vol.-% C$_n$H$_m$, 700 g/m$^3$ H$_2$O und 50 g/m$^3$ höher molekulare Kohlenwasserstoffe wird nach Aufheizen der Anlage durch die Verbrennung von Unterfeuerungsgas auf etwa 1000° C dem Mischrohr 1 mit 120° C zugeführt und in diesem mit 40 m$^3$ Sauerstoff, der ebenfalls auf 120° C vorgewärmt wurde, vermischt. Vorliegende Gasmischung wird mit 25 m/s durch das Mischrohr 1 über die auf 90° C gekühlte Abrißkante 14 in die Brennkammer 2 geführt. Hier wird das Gemisch pulsierend selbsttätig gezündet; dabei steigt die Temperatur auf 1250°C an. In den mäßig isolierten Apparaturen des Resonanzrohres 3 und der Ausgleichskammer 4 sinkt die Temperatur auf 600°C. Ein Wärmetauscher 15 soll dem Produktgas Wärme für einen Temperaturabfall auf 500°C entziehen. Am Austritt des Wärmetauschers hat das Gas folgende Zusammensetzung:

55 Vol.-% $H_2$, 25 Vol.-% CO, 0,4 Vol.-% $CH_4$, 15 Vol.-% $CO_2$, 3 Vol.-% $N_2$ mit Beimengungen von 5 bis 6 $g/m^3$ Vn $H_2S$, 1 bis 3 $g/m^3$ $NH_3$ und 2 bis 3 $g/m^3$ HCN. Das Gas soll danach einer Heißentschwefelung bei 500°C und einer Konvertierung bei 600°C unterzogen werden. Der Ventilator 5 saugt das Fertiggas ab. Er ist so ausgelegt, daß die konstruktiven Elemente 2, 3 und 4 bei einem Unterdruck von 70 mbar arbeiten.

### Beispiel 2 (Fig. 2)

Ein Koksofenrohgas mit der wie im Beispiel 1 angegebenen Zusammensetzung und den gleichen Temperatur- und Druckverhältnissen wird der Brennkammer 2 über das Mischrohr 1 zugeführt. Zusätzlich wird über Stutzen 11b dem Mischrohr 11 000 $g/m^3$ wasserhaltiger Dampf (wie z. B. verdampfte Kühlenkondensate) zugeführt. Bei einer Aufgabe von 70 $m^3$ Sauerstoff wird eine Brennkammertemperatur von 1020°C gemessen. Die Produktgaszusammensetzung weist 52,8 Vol.-% $H_2$, 5,9 Vol.-% $N_2$, 19,0 Vol.-% CO, 1,3 Vol.-% $CH_4$ und 20,8 Vol.-% $CO_2$ auf.

### Beispiel 3 (Fig. 3)

Ein Drehrohr arbeitet pechgebundene Kohleformlinge zu Halbkoksformlinge auf. Das bei der indirekten Befeuerung gewonnene Abgas mit einer Zusammensetzung von 27 Vol.-% $H_2$, 52 Vol.-% $CH_4 + C_2H_6$, 1 Vol.-% $O_2$, 4 Vol.-% $C_nH_m$, 7 Vol.-% CO, 4 Vol.-% $CO_2$, 5 Vol.-% $N_2$ geht mit einer Temperatur von 370°C dem Mischrohr 1 zu und wird in diesem mit 60 $m^3$ Sauerstoff von 20°C vermengt. Nach diesem Vorgang stellt sich eine Mischtemperatur von 190°C ein. Das zündfähige Gas wird mit 40 m/s durch das Mischrohr 1 gefahren, wobei die Abrißkante 14 auf 120°C gekühlt ist. In der Brennkammer 2 wird eine max. Reaktionstemperatur nur 1450°C gemessen.

Das so partiell oxidierte Schwelgas mit einer Zusammensetzung von 43 Vol.-% $H_2$, 1 Vol.-% $CH_4$, 3 Vol.-% $N_2$, 38 Vol.-% CO, 15 Vol.-% $CO_2$ wird über eine gut isolierte Apparatur dem Wärmetauscher 15 zugeleitet und in ihm auf 150°C gekühlt und dann über den Sauger 5 zur Weiterverarbeitung in einen Speicher gefahren. Durch das Absaugen der Produktgase werden die Anlagenelemente 2, 3 und 4 mit einem Unterdruck von 25 mbar betrieben.

### Beispiel 4 (Fig. 3, 4)

300 $m^3$ eines $CO_2$-reichen Erdgases (Sauergas) mit der Zusammensetzung 69 Vol.-% $CH_4$, 0,2 Vol.-% $C_nH_m$, 26 Vol.-% $CO_2$, 2,6 Vol.-% $N_2$, 1,1 Vol.-% $H_2S$ werden über den Brennkammern 2 eines Doppelschwingrohr-Systems über die Mischstrecke 1 zugeführt. Bei einer Aufgabe von 170 $m^3$ Sauerstoff über zwei Injektionslanzen gemäß Fig. 3 werden Brennkammertemperaturen von ca. 1600°C gemessen. Das Produktgas mit einer Zusammensetzung von 45 Vol.-% $H_2$, 25 Vol.-% CO, 2,5 Vol.-% $H_2S$, 0,4 Vol.-% SO, 24 Vol.-% $Co_2$, 2,5 Vol.-% $N_2$ wird wie im Beispiel 3 weiterverarbeitet.

### Patentansprüche

1. Verfahren zum Betreiben eines Schwingrohrreaktors für chemische Reaktionen von einem gasförmigen Reaktanden mit mindestens einem weiteren gasförmigen, flüssigen und/oder festen Reaktanden, bei dem

a) eine Mischstrecke mit den Reaktanden beaufschlagt wird,

b) durch die Reaktion der Reaktanden in einer Reaktionskammer eine Gasschwingung mit einer festen Frequenz zwischen einer Reaktionskammer und einer Ausgleichskammer entsteht und

c) das Reaktionsprodukt aus einer Ausgleichskammer abgeführt wird,

dadurch gekennzeichnet, daß

d) die Temperatur in der Mischstrecke unterhalb der Reaktionstemperaturen der Reaktanden und oberhalb der Schmelztemperatur der flüssigen und gasförmigen Reaktanden gehalten wird.

2. Verfahren nach Anspruch 1, dadurch gekennzeichnet, daß bei mit Flammenbildung verbundenen Reaktionen die Fördergeschwindigkeit der Reaktanden in der Mischstrecke größer als die Flammgeschwindigkeit ist.

3. Verfahren nach Anspruch 1 oder 2, dadurch gekennzeichnet, daß man gasförmige Reaktanden vor und/oder in der Mischstrecke durch Besprühen mit Kondensaten kühlt.

4. Verfahren nach einem oder mehreren der Ansprüche 1 bis 3, dadurch gekennzeichnet, daß bei der Verwendung von Doppelschwingrohren diese unterschiedlich mit Reaktanden beaufschlagt werden.

5. Verfahren nach einem oder mehreren der Ansprüche 1 bis 4, dadurch gekennzeichnet, daß Kohledestillationsgase unterstöchiometrisch mit sauerstoffhaltigen Gasen unterhalb der Zündtemperatur gemischt und unter Bildung eines wasserstoff- und kohlenmonoxidhaltigen Produktgases gecrackt und partiell oxidiert werden.

6. Verfahren nach einem oder mehreren der Ansprüche 1 bis 5, dadurch gekennzeichnet, daß die Reaktionsprodukte im Schwingrohrreaktor durch Einstellen an sich bekannter Reaktionsbedingungen einer chemischen Umwandlung unterzogen werden.

7. Verfahren nach einem oder mehreren der Ansprüche 1 bis 6, dadurch gekennzeichnet, daß zum Inbetriebnehmen des Schwingrohrreaktors die gewünschten Reaktionsbedingungen mit Hilfsreaktanden eingestellt werden.

## Claims

1. A method of operating an oscillating column reactor for chemical reactions of a gaseous reactant with at least one further gaseous, liquid and/or solid reactant, in which:

a) the reactants are admitted to a mixing path,
b) a gas vibration having a fixed frequency occurs between a reaction chamber and a compensating chamber as a result of the reaction of the reactants in a reaction chamber and
c) the reaction product is removed from a compensating chamber,

characterised in that

d) the temperature in the mixing path is maintained below the reaction temperatures of the reactants and above the melting point of the liquid and gaseous reactants.

2. A method as claimed in claim 1, characterised in that in the case of reactions connected with the formation of flames, the supply speed of the reactants of the mixing path is greater than the flame speed.

3. A method as claimed in claim 1 or 2, characterised in that gaseous reactants are cooled before and/or in the mixing path by spraying with condensation products.

4. A method as claimed in one or more of claims 1 to 3, characterised in that the reactants are admitted in a different manner in the case of use of double oscillating columns.

5. A method as claimed in one or more of claims 1 to 4, characterised in that coal distillation gases are mixed in a sub-stoichiometric manner with gases containing oxygen below the ignition temperature and are cracked and partially oxidised with the formation of a product gas containing hydrogen and carbon monoxide.

6. A method as claimed in one or more of claims 1 to 5, characterised in that the reaction products are subjected to a chemical conversion in he oscillating column reactor by adjustment to reaction conditions which are known per se.

7. A method as claimed in one or more of claims 1 to 6, characterised in that for the purposes of starting the oscillating tube reactor the required reaction conditions are produced using auxiliary reactants.

## Revendications

1. Procédé d'exploitation d'un réacteur avec tube à oscillations pour des réactions chimiques d'un réactif gazeux avec au moins un autre réactif gazeux, liquide et (ou) solide, dans lequel:

a) les réactifs sont introduits dans une zone de mélange,
b) la réaction des réactifs dans une chambre de réaction crée dans les produits gazeux une oscillation à fréquence fixe entre la chambre de réaction et une chambre de compensation et
c) le produit réactionnel est soutiré de la chambre de compensation,

caractérisé en ce que

d) dans la zone de mélange, la température est maintenue inférieure aux températures de réaction des réactifs et supérieure à la température de fusion des réactifs liquides et gazeux.

2. Procédé selon la revendication 1, caractérisé en ce que, dans le cas de réactions donnant lieu à la formation de flammes, la vitesse d'avancement des réactifs à travers la zone de mélange est supérieure à la vitesse des flammes.

3. Procédé selon la revendication 1 ou la revendication 2, caractérisé en ce que les réactifs gazeux sont refroidis avant et (ou) dans la zone de mélange par pulvérisation de condensats.

4. Procédé selon une ou plusieurs des revendications 1 à 3, caractérisé en ce que, dans le cas de l'utilisation de tubes à oscillations doubles, chacun de ceux-ci est chargé de façon différente de reáctifs.

5. Procédé selon une ou plusieurs des revendications 1 à 4, caractérisé en ce que les produits gazeux de la distillation du charbon sont mélangés, à une température inférieure à la température d'inflammation, avec une proportion inférieure à la proportion stoechiométrique d'un mélange gazeux contenant de l'oxygène et soumis à un craquage et à une oxydation partielle avec formation d'un mélange gazeux contenant de l'oxygène et de l'oxyde de carbone.

6. Procédé selon une ou plusieurs des revendications 1 à 5, caractérisé en ce que les produits réactionnels sont soumis dans le réacteur à tube à oscillations, par la réalisation de conditions opératoires connues en soi, à une réactions chimique.

7. Procédé selon une ou plusieurs des revendications 1 à 6, caractérisé en ce que les conditions opératoires pour la mise en service du réacteur à tube à oscillations sont créées à l'aide de réactifs auxiliaires.

FIG.1

Kohledestillationsgase
(Koksofenrohgas)

Sauerstoff, Luft

Startgas

9b
9a
8
10a
10b

11

1

Kühlwasseraustritt

Kühlwassereintritt

13
12
14

Gemischaustritt

FIG.2

Reaktand
(Sauerstoff, Luft)

Reaktand (Koksofenrohgas)
Hilfsreaktand (Startgas)

FIG. 3

1

19

18

Kühlwasseraustritt

Kühlwassereintritt

12

14

Gemischaustritt

FIG.4

# FIG. 5

Brenngas   Luft/Sauerstoff

**Temperaturführung**

----- Sauerstoff bzw. sauerstoffhaltige Gase

——— Einsatz-bzw.
Produktgase

/////  Temperaturbereich des
vorliegenden Verfahrens

o Ausführungsbeispiel 1
× Ausführungsbeispiel 2
• Ausführungsbeispiel 3
□ Ausführungsbeispiel 4

Produktgas

0   200   400   600   800   1000   1200   1400

Temperatur °C